Europäisches Patentamt

European Patent Office

Office européen des brevets

(11) Veröffentlichungsnummer: **0 208 000**
**B1**

(12) **EUROPÄISCHE PATENTSCHRIFT**

(45) Veröffentlichungstag der Patentschrift:
11.10.89

(51) Int. Cl.⁴: **B 41 J 31/00**, B 41 M 5/10,
C 04 B 41/45, B 41 M 1/34,
H 01 G 1/04

(21) Anmeldenummer: 85107742.0

(22) Anmeldetag: 24.06.85

(54) Farbband zum Bedrucken von Keramikmaterial.

(73) Patentinhaber: IBM DEUTSCHLAND GMBH
Pascalstrasse 100
D-7000 Stuttgart 80 (DE)
DE
International Business Machines Corporation
Old Orchard Road
Armonk, N.Y. 10504 (US)
FR GB IT

(43) Veröffentlichungstag der Anmeldung:
14.01.87 Patentblatt 87/03

(45) Bekanntmachung des Hinweises auf die Patenterteilung: 11.10.89 Patentblatt 89/41

(84) Benannte Vertragsstaaten:
DE FR GB IT

(56) Entgegenhaltungen:
CH-A- 459 272
US-A- 3 111 422
US-A- 3 506 473
US-A- 3 785 895
US-A- 4 251 276
GLASS & CERAMICS, Band 36, Nr. 3/4, März/April 1979, Seiten 150-153, Plenum Publishing Corp., New York, US; O.S. GRUM-GRZHIMAILO et al.: "Forming a relief on glaze coatings"

(72) Erfinder: Gnamm, Dieter
Schenkenstrasse 3
D-7022 Leinfelden-Echterdingen (DE)
Erfinder: Kleinbeck, Erwin
Deckenpfronner Strasse 55
D-7261 Gültingen (DE)

(74) Vertreter: Kreidler, Eva-Maria, Dr. rer. nat.
Schönaicher Strasse 220
D-7030 Böblingen (DE)

EP 0 208 000 B1

**Beschreibung**

Die Erfindung betrifft ein Farbband zum Bedrucken von ungesinterten Keramiksubstraten, ein Verfahren zu seiner Herstellung und seine Verwendung zum Beschriften von Keramiksubstraten in der Mehrschichtkeramiktechnologie.

Mit der heutigen Mehrschichtkeramiktechnologie können Keramiksubstrate hergestellt werden, auf denen, je nach Entwurf, mehr als 100 Halbleiterchips angeordnet werden können. Diese Keramiksubstrate enthalten Signalebenen, Signalverteilungsebenen und weitere Ebenen. Auf den Signalebenen sind Leiterzüge aufgedruckt, welche in X- oder in Y-Richtung verlaufen und die Funktionen eines bestimmten Substrats bestimmen. Man nennt sie daher auch Personalisierungsebenen. Die Signalverteilungsebenen dienen dazu, Signale von der oberen zu den tieferen Ebenen zu verteilen und zur Herstellung der Verbindung zu den Kontaktstiften des Moduls und damit zur Leiterplatte. Andere Ebenen sind für die Energieversorung und für die Ausführung gewünschter elektrischer Funktionen vorgesehen. Die Substrate können, je nach Produkttyp, aus etwa 17 bis 38 oder mehr Schichten aus Aluminiumoxidkeramik mit aufgedruckten Molybdänmetallmustern mit einer Gesamtschichtdicke von 4 bis 8 mm bestehen.

Die Herstellung von Keramiksubstraten erfordert viele Prozeßschritte. Diese umfassen die Rohmaterialaufbereitung, das Herstellen der Keramiklagen, das Prüfen und Reparieren, das Herstellen des Laminats, das Sintern, die chemische und galvanische Oberflächenbehandlung, den elektrischen Test und die Reparatur, das Löten und die Endprüfung.

Das Herstellen der Keramiklagen umfaßt das Gießen eines Keramikbandes, das Ausstanzen der Rohlinge, das Stanzen der Positionierungslöcher und der Durchgangslöcher, das Füllen der Durchgangslöcher und das Drucken der Leiterzüge mit Molybdänpaste. Es ist erwünscht, die einzelnen gestanzten und mit Molybdänpaste bedruckten Blätter aus Aluminiumoxidkeramik erst unmittelbar vor dem Zusammenpressen zu einem Laminat und dem Sinterprozeß zu kennzeichnen. Mit einer automatischen Leseeinrichtung kann dann die jeweils zugeteilte Identifizierungsnummer auf dem Blatt gelesen und festgestellt werden, ob sich das richtige Blatt in der Stapelvorrichtung der Laminiereinheit befindet. Außerdem kann später am fertigen Produkt anhand dieser Identifizierungsnummer zurückverfolgt werden, zu welcher Serie das einzelne Blatt gehört hat.

Bisher wurde zur Herstellung von Identifizierungsnummern gleichzeitig mit dem Aufdrucken der Metallmuster in einer Siebdruckmaschine ein Beschriftungsfeld aus waagrechten und senkrechten Balken durch eine entsprechende Maske auf die einzelnen Blätter aufgedruckt, und bei der Erstellung einer Reihe von Identifizierungsnummern wurden die unerwünschten Teile des aufgedruckten Beschriftungsfeldes mit Hilfe eines Laserstrahles wieder weggebrannt. Nachteilig an diesem Verfahren ist, daß bei der Erstellung von Identifizierungsnummern mit dem Laserstrahl nur waagrechte und senkrechte Balken mit hinreichender Geschwindigkeit weggebrannt werden können. Bei Übergang zu einer anderen Schrift, beispielsweise zu alphanumerischer Beschriftung, ist das Wegbrennen der unerwünschten Teile der Beschriftung mit einem Laserstrahl zeitlich zu aufwendig, weil alle nicht erwünschten Teile durch punktförmiges Abbrennen mit dem Strahl entfernt werden müssen. Nachteilig ist auch, daß durch das Siebdrucken nur Identifizierungsnummern, die erhaben auf der Oberfläche der Keramikblätter angeordnet sind, hergestellt werden können.

Aus der US-Patentschrift 3 384 931 ist ein Verfahren zur Beschriftung von Keramik bekannt, das eine Düse verwendet, mit der eine Paste, z. B. aus etwa 80 Gew.% Molybdänpulver, Rest Äthylcellulose und Butylcarbitolacetat aufgebracht wird. Nachteilig an diesem Verfahren ist, daß es zu langsam ist und beim Schreiben zur Klecksbildung neigt. Bei kleineren Stückzahlen kann die Kennzeichnung der Substrate mit einer Metallpaste, beispielsweise mit einer Molybdänpaste, auch von Hand mit einer Rakel und einer Numerierungsmaske vorgenommen werden. Nachteilig an diesem Verfahren ist seine auf kleine Stückzahlen begrenzte Anwendung und daß ein erhabenes Schriftbild erhalten wird.

Aus der US-Patentschrift 4 251 276 ist ein Farbübertragungsband mit einer thermisch aktivierbaren Tintenzusammensetzung bekannt, welche

a) ein thermisch stabiles Polymer mit einem Molekulargewicht von etwa 1 000 bis 10 000 und einem Erweichungspunkt von etwa 50 bis 125 °C aus der Gruppe von Styrolallylalkohol-Copolymeren und Polyamidharzen ;

b) ein Ölgeliermittel aus der Gruppe von Carbonsäuren mit 11 bis 18 C-Atomen und 1 bis 2 Hydroxylgruppen ; und

c) ein Öl als Lösungsmittel für das Polymere und das Geliermittel enthält, wobei die Bestandteile a) etwa 25 bis 45 Gew.%, b) etwa 6 bis 13 Gew.% und c) etwa 12 bis 26 Gew.%, bezogen auf die gesamten nichtflüchtigen Komponenten, betragen.

Die Tintenzusammensetzung enthält auch ein Pigment, beispielsweise Ruß, in einer Menge von etwa 15 bis 25 Gew.%, bezogen auf die gesamten nichtflüchtigen Bestandteile der Zusammensetzung.

Aufgabe der Erfindung ist die Bereitstellung eines Farbbandes für ein Verfahren zum Bedrucken von ungesinterten Keramiksubstraten, das die Kennzeichnung großer Stückzahlen ermöglicht und das die Herstellung jedes gewünschten Schriftbildes gestattet, wobei die Schrift in der Substratoberfläche erzeugt wird. Die mit dem erfindungsgemäßen Farbband erzeugte Schrift soll sowohl auf der ungesinterten Keramik wie auch nach dem Sintern in einer reduzierenden Ofenatmosphäre mit einer Dauer von mehr als 20 Stunden bei Temperaturen von etwa 1 000 bis 1 700 °C lesbar sein.

Die Aufgabe der Erfindung wird gelöst durch ein Farbband gemäß Patentanspruch 1.

Die Erfindung umfaßt auch ein Verfahren zur Herstellung des erfindungsgemäßen Farbbandes und seine Verwendung zum Beschriften von Keramiksubstraten in der Mehrschichtkeramiktechnologie.

Die Erfindung wird anhand der speziellen Beschreibung und der Ausführungsbeispiele näher erläutert.

Durch die Erfindung wird ein Farbband zum Beschriften von Keramiksubstraten geschaffen, das einen dichten Abdruck mit hoher Auflösung und die Herstellung jedes gewünschten Schriftbildes gestattet, wobei die Schrift in die Substratoberfläche eingelassen ist. Durch die erfindungsgemäße Zusammensetzung des Farbbandes kann die Schrift sowohl auf der ungesinterten Keramik wie auch nach dem Sintern in reduzierender Ofenatmosphäre bei Temperaturen in der Größenordnung von 1 600 °C mit einer automatischen Leseeinrichtung gelesen werden.

Die Farbschicht des Farbbandes besteht aus farbgebenden Materialien, beispielsweise aus einem Oxid aus der Gruppe von Titan, Vanadium, Tantal, Chrom, Molybdän, Wolfram und Ruthenium oder aus Mischungen derselben und Lampenruß oder Ruß und einem organischen Bindemittel und organischen Modifiziermitteln. Als Bindemittel wird ein thermoplastisches polymeres Harz mit einem Schmelzpunkt zwischen etwa 40 und 100 °C angewendet. Es ist dabei wichtig, daß das thermoplastische polymere Harz in einem Lösungsmittel oder Lösungsmittelgemisch löslich ist, das wiederum das Substrat nicht angreift.

Außergewöhnlich gute Ergebnisse bei der Beschriftung von Keramiksubstraten wurden bei Verwendung einer Mischung von Chromoxid, Titandioxid und Vanadiumpentaoxid als farbgebendes Material erhalten. Als Oxide können beispielsweise Chrom(III) oxid, Merck-Nr. 2483 ; Titan(IV) oxid, Merck-Nr. 808 und Vanadium(V) oxid, Merck-Nr. 824 verwendet werden. Der Feststoffgehalt des Farbbandes an diesen Oxiden beträgt in vorteilhafter Weise etwa 30 bis 50 Gew.%. Die mit einem Farbband mit den zuvor genannten Oxiden auf « grünen » Keramiklaminaten hergestellten Drucke können vor dem Sintern mit bloßem Auge und automatisch gelesen werden. Es ist allerdings vorteilhaft, dem Farbband Ruß zuzusetzen, damit ein höherer Kontrast zwischen der aufgedruckten Schrift und der noch ungesinterten Keramikunterlage erhalten wird. Als Ruß kann beispielsweise Mogul L Carbon Black der Cabot Corp., Boston, Mass. eingesetzt werden, wobei Mengen zwischen etwa 3 und 5 Gew.% vorteilhaft sind.

Es wurde auch gefunden, daß die guten Ergebnisse beim Drucken auf die Verwendung von Polyamid als thermoplastisches Bindemittel zurückzuführen sind. Ein bevorzugtes Harz ist beispielsweise Emerez 1533, das von der Emery Industries, Cinn., Oh., im Handel erhältlich ist. Es wird angenommen, daß Emerez 1533 ein Polyamid auf Dimersäurebasis mit einem Erweichungspunkt von etwa 98 bis 102 °C ist. Einzelheiten über das Harz sind in Emery Technical Bulletin, Nr. 446A enthalten. Andere brauchbare, thermoplastische Polymerharze sind beispielsweise Phenol-Formaldehydharze, Polyester oder Celluloseacetatbutyratharze.

Als Modifiziermittel zur Verbesserung der Benetzung der Feststoffpigmente und ihrer Dispergierbarkeit kommen beispielsweise Mineralöle in Frage. Ein bevorzugtes Mineralöl ist Weissöl, insbesondere Standard-Nr. 34 Öl, das von der Standard Oil Corp., New Jersey, im Handel erhältlich ist. Im allgemeinen ist ein weiteres Modifizierungsmittel zum Dispergieren von Harz und Pigment erforderlich. Die gewünschten Eigenschaften können dem Farbgemisch beispielsweise durch Zugabe gemischter Fettsäureoctylester während der Zubereitung verliehen werden. Als Beispiel für einen gemischten Fettsäureoctylester sei Octyloleat, das von der C. P. Hall Company, Chicago, Ill., erhältlich ist, genannt. Schließlich wird ein Hilfsmittel für das Mahlen der Bestandteile in der Kugelmühle zugegeben. Als solches wird beispielsweise Oleylamin von Sherex Chemical, Dublin, Oh., verwendet.

Ausführungsbeispiele :

Nachfolgend wird anhand von Beispiel I ein Herstellungsverfahren für das Farbband gemäß der Erfindung beschrieben. Die Farbbänder gemäß der anderen Ausführungsbeispiele werden in der gleichen Weise hergestellt. Alle Bestandteile werden in Gewichtsprozenten angegeben, wobei sich der Prozentgehalt der Bestandteile auf die gesamte, trockene Tintenmischung oder trockene Tintenschicht bezieht.

Beispiel I

| Feststoffe | Gew.% |
|---|---|
| Harz (Emerez 1533) | 37,1 |
| Chromoxid | 10,0 |
| Titandioxid | 10,0 |
| Vanadiumpentaoxid | 10,0 |
| Mogul L Ruß | 5,0 |
| Mineralöl Standard-Nr. 34 | 11,0 |
| Octyloleat | 15,3 |
| Oleylamin | 1,6 |
| | 100,0 |

Das Emerez 1533 Harz wird in einem Lösungsmittelgemisch von ungefähr 6 Teilen Isopropanol auf 1 Teil Toluol gelöst. Es werden ungefähr 2 Gewichtsteile des Lösungsmittelgemisches auf 1 Gewichtsteil des Harzes verwendet. Nachdem das Harz vollständig aufgelöst ist, werden die Oxidpigmente, Ruß und die anderen Bestandteile und weitere 12 Teile Isopropanol zugegeben. Diese Mischung wird dann ungefähr 9 Stunden lang in einer Kugelmühle gemahlen. Anschließend wird die Mischung auf ein Substrat, beispielsweise einen Polyäthylenfilm, welcher eine Schichtdicke von 15 μm aufweist, in der gewünschten Schichtdicke aufgetragen. Anschließend werden die beschichteten Farbbänder in einem Umluftofen getrocknet. Die Trockenschichtdicke der Farbübertragungsschicht beträgt in vorteilhafter Weise etwa 10 bis 20 μm.

Zum Bedrucken von Keramiksubstraten unter Verwendung des zuvor beschriebenen Farbbandes können elektromechanische Druckwerke (auch Typenanschlagdrucker), vorzugsweise aber Nadeldrucker, insbesondere solche Nadeldrucker, bei denen die Drucknadeln matrixförmig angeordnet sind, verwendet werden. Mit einem Drucker der zuletzt genannten Art wurden Rohlinge für die Mehrschichtkeramiktechnologie beschriftet. Vor dem Sintern war die Schrift, welche sowohl mit dem Auge wie auch mit der Maschine gelesen werden kann, von hellbrauner Farbe. Beim Sintern in einer reduzierenden Ofenatmosphäre und einer Dauer von mehr als 20 Stunden bei Temperaturen von etwa 1 600 °C wurde eine Schrift von mittel- bis dunkelbrauner Farbe erhalten.

### Beispiel II

| Feststoffe | Gew.% |
|---|---|
| Emerez 1533 | 37,1 |
| Chromoxid | 6,0 |
| Titandioxid | 12,0 |
| Vanadiumpentaoxid | 12,0 |
| Mogul L Ruß | 5,0 |
| Mineralöl Standard-Nr. 34 | 11,0 |
| Octyloleat | 15,3 |
| Oleylamin | 1,6 |
| | 100,0 |

Die Bestandteile wurden, wie in Beispiel I angegeben, verarbeitet unter Verwendung des gleichen Lösungsmittelgemisches in den gleichen Mengen. Es wurde ebenfalls vor dem Sintern ein hellbraunes Schriftbild und nach dem Sintern ein mittel- bis dunkelbraunes Schriftbild erhalten.

### Beispiel III

| Feststoffe | Gew.% |
|---|---|
| Emerez 1533 | 30,0 |
| Chromoxid | 10,0 |
| Titandioxid | 20,0 |
| Vanadiumpentaoxid | 20,0 |
| Mogul L Ruß | — |
| Mineralöl Standard-Nr. 34 | 3,4 |
| Octyloleat | 15,0 |
| Oleylamin | 1,6 |
| | 100,0 |

Die Bestandteile wurden, wie in Beispiel I angegeben, verarbeitet. Im Gegensatz zu den Beispielen I und II enthält das Farbband gemäß Beispiel III 50 Gew.% Chromoxid/Titandioxid/Vanadiumpentaoxid-Pigment. Um einen besseren Kontrast zwischen der Schrift und der Unterlage zu erhalten, ist es allerdings vorteilhaft, den Gehalt an Oxidpigment in der Farbübertragungsschicht um etwa 3 Gew.% abzusenken und durch die entsprechende Menge Ruß zu ersetzen.

### Beispiel IV

| Feststoffe | Gew.% |
|---|---|
| Emerez 1533 | 30,0 |
| Chromoxid | 20,0 |
| Titandioxid | 30,0 |

| | |
|---|---|
| Vanadiumpentaoxid | — |
| Mogul L Ruß | — |
| Mineralöl Standard-Nr. 34 | 3,4 |
| Octyloleat | 15,0 |
| Oleylamin | 1,6 |
| | 100,0 |

Die Bestandteile wurden, wie in Beispiel I angegeben, verarbeitet. Es wurde beim Drucken ein hellgrünes Schriftbild erhalten, welches nach dem Sintern dunkelrot ist.

Die gemäß der Erfindung hergestellten Farbbänder lassen sich allgemein zum Beschriften technischer Keramik einsetzen. In besonders vorteilhafter Weise können sie, wie eingangs ausgeführt, zum Beschriften von Rohlingen in der Mehrschichtkeramiktechnologie eingesetzt werden. Die erhaltene Schrift ist sowohl mit dem Auge wie auch maschinenlesbar. Der Kontrast der Schrift zur Keramik bleibt immer der gleiche. Die Schrift ist elektrisch nichtleitend und macht auch die danachfolgende Metallisierung der Keramiklagen, im Gegensatz zur Molybdänpasten-Beschriftung, nicht mit. Es ist von Vorteil, daß die Schriftzeichen in die Oberfläche der Keramik eingedrückt werden. Das zuvor beschriebene Prinzip der Beschriftung für Keramikmaterialien kann auch für Glaskeramikmaterialien angewendet werden.

## Patentansprüche

1. Farbband zum Bedrucken von ungesinterten Keramiksubstraten, bestehend aus einem dünnen flexiblen Substrat und einer auf diesem angeordneten Farbübertragungsschicht, welche eine farbgebendes Material, ggf. ein Kontrastmittel, ein organisches Bindemittel und ein organisches Modifizierungsmittel enthält, dadurch gekennzeichnet, daß das farbgebende Material sinterbeständig ist und ein Oxid aus der Gruppe von Titan, Vanadium, Tantal, Chrom, Molybdän, Wolfram und Ruthenium oder Mischungen derselben enthält.

2. Farbband nach Anspruch 1, dadurch gekennzeichnet, daß die Farbübertragungsschicht etwa 30 bis 50 Gew.% an Oxiden von Titan, Vanadium, Tantal, Chrom, Molybdän, Wolfram und Ruthenium enthält.

3. Farbband nach Anspruch 2, dadurch gekennzeichnet, daß die Farbübertragungsschicht etwa 6 bis 10 Gew.% Chromoxid, etwa 10 bis 20 Gew.% Titandioxid und etwa 10 bis 20 Gew.% Vanadiumpentaoxid als farbgebendes Material enthält.

4. Farbband nach Anspruch 1, dadurch gekennzeichnet, daß die Farbübertragungsschicht als Kontrastmittel Ruß enthält.

5. Farbband nache Anspruch 4, dadurch gekennzeichnet, daß die Farbübertragungsschicht etwa 3 bis 5 Gew.% Ruß enthält.

6. Farbband nach Anspruch 1, dadurch gekennzeichnet, daß die Farbübertragungsschicht ein Polyamid als organisches Bindemittel enthält.

7. Farbband nach Anspruch 1, dadurch gekennzeichnet, daß die Farbübertragungsschicht als Modifiziermittel Mineralöle, Fettsäure-Octylester und Oleylamin enthält.

8. Farbband nach den Ansprüchen 6 und 7, dadurch gekennzeichnet, daß die Farbübertragungsschicht
etwa 30 bis 38 Gew.% Polyamid ;
etwa 3 bis 11 Gew.% Mineralöl ;
etwa 15 bis 16 Gew.% Octyloleat und
etwa 1 bis 2 Gew.% Oleylamin
enthält.

9. Farbband nach Anspruch 1, dadurch gekennzeichnet, daß als Substrat ein etwa 15 μm dicker Polyäthylenfilm verwendet wird.

10. Farbband nach Anspruch 1, dadurch gekennzeichnet, daß die Farbübertragungsschicht eine Trockenschichtdicke von etwa 10 bis 20 μm aufweist.

11. Verfahren zur Herstellung eines Farbbandes nach den Ansprüchen 1 bis 10, bei dem ein dünnes flexibles Substrat mit einer Lösung oder Dispersion eines Harzes und eines farbgebenden Materials beschichtet und das Lösungsmittel danach entfernt wird, dadurch gekennzeichnet, daß eine Lösung von Polyamid in Isopropylalkohol und Toluol hergestellt wird, mit weiterem Lösungsmittel und Oxiden des Chroms, Titans und Vanadiums und Ruß vermischt und in einer Kugelmühle gemahlen wird, in der gewünschten Schichtdicke auf das Substrat aufgetragen und in einem Umluftofen getrocknet wird.

12. Verwendung des Farbbandes gemäß den Ansprüchen 1 bis 10 zum Beschriften von ungesinterten Keramiksubstraten in der Mehrschichtkeramiktechnologie mit einem elektromechanischen oder einem Nadeldrucker.

## Claims

1. Ink ribbon for printing on unsintered ceramic substrates, consisting of a thin flexible substrate and an ink transfer layer provided thereon, said layer comprising a colour-bearing material, possibly a contrast medium, an organic binder, and an organic modifying agent, characterized in that the colour-bearing material is sinter-resistant and comprises an oxide selected from the group consisting of titanium, vanadium, tantalum, chromium, molybdenum, tungsten and ruthenium, or mixtures thereof.

2. Ink ribbon as claimed in claim 1, characterized in that the ink transfer layer comprises approx. 30 to 50 percent by weight of oxides of titanium, vanadium, tantalum, chromium, molybdenum, tungsten and ruthenium.

3. Ink ribbon as claimed in claim 2, characterized in that the ink transfer layer comprises approx. 6 to 10 percent by weight of chromium oxide, approx. 10 to 20 percent by weight titanium dioxide, and approx. 10 to 20 percent by weight of vanadium pentaoxide as a colour-bearing material.

4. Ink ribbon as claimed in claim 1, characterized in that the ink transfer layer comprises carbon black as a contrast medium.

5. Ink ribbon as claimed in claim 4, characterized in that the ink transfer layer comprises approx. 3 to 5 percent by weight of carbon black.

6. Ink ribbon as claimed in claim 1, characterized in that the ink transfer layer comprises a polyamide as an organic binder.

7. Ink ribbon as claimed in claim 1, characterized in that the ink transfer layer comprises as modifying agent mineral oils, fatty acid octyl esters, and oleyl amine.

8. Ink ribbon as claimed in claim 6 and 7, characterized in that the ink transfer layer comprises

approx. 30 to 38 percent by weight polyamide ;

approx. 3 to 11 percent by weight mineral oil ;

approx. 15 to 16 percent by weight octyl oleate ; and

approx. 1 to 2 percent by weight oleyl amine.

9. Ink ribbon as claimed in claim 1, characterized in that as a substrate an approx. 15 $\mu$m thick polyethylene film is used.

10. Ink ribbon as claimed in claim 1, characterized in that the ink transfer layer has a dry layer thickness of approx. 10 to 20 $\mu$m.

11. Method of making a ribbon as claimed in claim 1 to 10, where a thin flexible substrate is coated with a solution or dispersion of a resin and of a colour-bearing material, and where the solvent is subsequently removed, characterized in that solution of polyamide in isopropyl alcohol and toluene is made, mixed with some more solvent and the oxides of chromium, titanium and vanadium, and carbon black, and ground in a ball mill, applied on the substrate in the respective layer thickness, and dried in a circulating air oven.

12. Use of the ribbon as claimed in claim 1 to 10 for printing on ceramic substrates in the multilayer ceramic technology, with an electromechanic or wire printer.

**Revendications**

1. Ruban encreur pour l'impression sur des substrats céramiques non frittés, constitué par un substrat flexible mince et une couche de transfert de l'encre, qui est disposée sur ce substrat et contient un matériau d'encrage, éventuellement un · agent de contraste, un liant organique et un agent modificateur organique, caractérisé en ce que le matériau d'encrage résiste au frittage et contient un oxyde appartenant au groupe du titane, vanadium, tantale, chrome, molybdène, tungstène, ruthénium ou des mélanges de ces éléments.

2. Ruban encreur selon la revendication 1, caractérisé en ce que la couche de transfert de l'encre contient environ 30 à 50 % en poids d'oxyde de titane, de vanadium, de tantale, de chrome, de molybdène, de tungstène et de ruthénium.

3. Ruban encreur selon la revendication 2, caractérisé en ce que la couche de transfert de l'encre contient environ 6 à 10 % en poids d'oxyde de chrome, environ 10 à 20 % en poids de bioxyde de titane et environ 10 à 20 % en poids de pentoxyde de vanadium, en tant que matériau d'encrage.

4. Ruban encreur selon la revendication 1, caractérisé en ce que la couche de transfert de l'encre contient du noir de carbone en tant qu'agent de contraste.

5. Ruban encreur selon la revendication 4, caractérisé en ce que la couche de transfert de l'encre contient environ 3 à 5 % en poids de noir de carbone.

6. Ruban encreur selon la revendication 1, caractérisé en ce que la couche de transfert de l'encre contient un polyamide en tant que liant organique.

7. Ruban encreur selon la revendication 1, caractérisé en ce que la couche de transfert de l'encre contient comme agent modificateur des huiles minérales, un ester octylique d'acide gras et de l'oléylamine.

8. Ruban encreur selon les revendications 6 et 7, caractérisé en ce que la couche de transfert de l'encre contient

environ 30 à 38 % en poids d'un polyamide ;

environ 3 à 11 % en poids d'huile minérale ;

environ 15 à 16 % en poids d'oléate octylique, et
environ 1 à 2 % en poids d'oléylamine.

9. Ruban encreur selon la revendication 1, caractérisé en ce qu'on utilise, comme substrat, un film de polyéthylène possédant une épaisseur d'environ 15 μm.

10. Ruban encreur selon la revendication 1, caractérisé en ce que la couche de transfert de l'encre possède une épaisseur à sec comprise entre environ 10 et 20 μm.

11. Procédé pour fabriquer un ruban encreur selon les revendications 1 à 10, selon lequel on recouvre un substrat flexible mince avec une solution de dispersion d'une résine et d'un matériau d'encrage et on élimine ensuite le solvant, caractérisé en ce qu'on réalise une solution d'un polyamide dans de l'alcool isopropylique et du toluène, qu'on y mélange un autre solvant et des oxydes de chrome, de titane et de vanadium et du noir de carbone et qu'on broie cette solution dans un broyeur à boulets, qu'on la dépose sur le substrat, avec l'épaisseur de couche désirée, et qu'on la fait sécher dans un four à circulation d'air.

12. Utilisation du ruban encreur selon les revendications 1 à 10 pour l'impression sur des substrats céramiques non frittés dans la technologie des céramiques multicouches, au moyen d'une imprimante électromécanique ou d'une imprimante à aiguilles.